# FASCICULE DE BREVET EUROPEEN

(11) **EP 0 780 432 B1**
(45) Date de publication et mention de la délivrance du brevet: **29.03.2000**
(21) Numéro de dépôt: 96203589.5
(22) Date de dépôt: 17.12.1996
(51) Int. Cl.: C08L 23/16, B32B 27/32, C09J 123/16

(54) **Compositions à base de copolymères statistiques du propylène, procédé pour leur fabrication, et feuilles multicouches thermoscellables les contenant**
Random-Propylen-Copolymer-Zusammensetzungen, ihre Herstellung und daraus hergestellte schmelzsiegelbare Laminate
Compositions of random propylene copolymers, their preparation and heat-sealable laminate thereof

(30) Priorité: 22.12.1995 BE 9501068
(43) Date de publication de la demande: 25.06.1997
(73) Titulaire: Solvay Polyolefins Europe-Belgium (Société Anonyme), 1050 Bruxelles (BE)
(72) Inventeur: Mikielski, Raymond, 1310 La Hulpe (BE); DeBlauwe, Veerle, 1840 Londerzeel (BE); Wilkin, Mathieu, 1780 Wemmel (BE)
(74) Mandataire: Troch, Geneviève

(56) Documents cités:
- EP-A- 0 252 718
- EP-A- 0 483 675
- EP-A- 0 663 422
- DE-A- 4 109 368
- GB-A- 1 569 112
- US-A- 4 211 852

## Description

La présente invention concerne des compositions à base de copolymères statistiques du propylène. Elle concerne plus particulièrement des compositions présentant à la fois une température de fusion relativement élevée et une température de scellage relativement basse contenant deux copolymères statistiques du propylène de composition différente. La présente invention concerne également un procédé pour la fabrication de ces compositions. Elle concerne enfin des feuilles multicouches thermoscellables dont lesdites compositions constituent la couche thermoscellable.

Il est connu d'utiliser des copolymères statistiques du propylène contenant quelques % en poids d'éthylène pour la fabrication des couches thermoscellables (appelées "couches de scellage") de feuilles multicouches pour l'emballage dont la couche centrale est à base d'un polymère cristallin du propylène et qui sont généralement orientées biaxialement (appelées "films BOPP"). Pour abaisser la température de scellage de ces copolymères et améliorer les propriétés optiques des feuilles, on peut leur substituer des copolymères statistiques contenant, outre le propylène et l'éthylène, un troisième comonomère qui est de préférence le 1-butène.

Un inconvénient de ces copolymères réside dans le fait qu'à une température de scellage (dénommée ci après plus brièvement Tsc) donnée, la température de fusion (dénommée ci après plus brièvement Tf) est trop basse pour la mise en oeuvre sur certaines machines de fabrication des feuilles, engendrant ainsi des problèmes de collage sur les rouleaux de ces machines.

On a tenté de remédier à ces inconvénients en utilisant des compositions contenant deux copolymères du propylène contenant des quantités variables d'unités monomériques dérivées d'éthylène et/ou de 1-butène.

A titre d'exemples de documents décrivant de telles compositions, on peut citer :
- le document EP-B-0263718 qui décrit des compositions faiblement cristallines à base de polymères du propylène comprenant :
   * 60 à 95 % en poids d'un copolymère statistique constitué de 97 à 86 moles % de propylène, de 0,5 à 6 moles % d'éthylène et de 2 à 13 moles % d'une α-oléfine en C4-20, le rapport molaire entre l'α-oléfine et la somme de l'éthylène et de l'α-oléfine incorporés étant de 0,3 à 0,9;
   * 40 à 5 % en poids d'un copolymère statistique constitué de 10 à 90 moles % de propylène et de 90 à 10 moles % d'une α-oléfine en C4-20;
- le document EP-A-0483523 qui décrit des compositions à base de polymères cristallins du propylène comprenant (pourcentages en poids):
   * 30 à 65 % d'un copolymère du propylène et d'une α-oléfine en C4-8 contenant de 98 à 80 % de propylène, et
   * 70 à 35 % d'un copolymère de propylène et d'éthylène et, optionnellement, de 2 à 10 % d'une α-oléfine en C4-8, ledit copolymère contenant 2 à 10 % d'éthylène en l'absence de l'α-oléfine en C4-8 et 0,5 à 5 % d'éthylène en présence de l'α-oléfine en C4-8;
- le document EP-A-0674991 qui décrit des compositions plus aptes à l'impression par encre que celles décrites dans le document précédent et qui comprennent (pourcentages en poids):
   * 20 à 60 % d'un copolymère du propylène et de l'éthylène, contenant 1 à 5 % d'éthylène;
   * 80 à 40 % d'un copolymère du propylène avec de l'éthylène et une α-oléfine en C4-8, dont la teneur en éthylène est comprise entre 1 et 5 % et la teneur en α-oléfine en C4-8 est comprise entre 6 et 15 %. Les teneurs totales en éthylène et en α-oléfine des compositions sont respectivement comprises entre 1 et 5 % et entre 2,4 et 12 %.

Toutefois les compositions décrites dans ces documents ne présentent pas simultanément un compromis optimal entre la Tf et la Tsc, une teneur en fractions solubles dans des solvants organiques tels que le xylène et l'hexane suffisamment basse. De ce fait ces compositions peuvent présenter des problèmes lors de leur mise en oeuvre pour le façonnage des feuilles tels que des problèmes de collage sur les rouleaux des machines utilisées pour cette mise en oeuvre ou des problèmes liés à l'émission de fumées lors de cette mise en oeuvre.

En outre les feuilles obtenues au moyen de ces compositions ne présentent pas toujours à la fois des propriétés optiques (brillance et transparence) optimales et d'excellentes propriétés mécaniques.

Dans certains cas, on observe en outre une migration des éventuels additifs à la surface des feuilles ce qui empêche d'utiliser ces compositions pour l'emballage alimentaire. Enfin leur aptitude à l'impression n'est pas toujours suffisante.

On a maintenant trouvé des compositions particulières à base de copolymères statistiques du propylène contenant des unités monomériques dérivées de l'éthylène et de 1-butène qui permettent de résoudre de manière satisfaisante l'ensemble des problèmes énumérés ci-dessus.

La présente invention concerne à cet effet, à titre principal, des compositions à base de polymères du propylène (compositions (C)) comprenant :
* de 68 à 80 % en poids d'un copolymère statistique du propylène (copolymère (A)) qui contient de 12 à 20 % en poids d'unités dérivées du 1-butène et de 0 à 2 % en poids d'unités dérivées de l'éthylène, et
* de 32 à 20 % en poids d'un copolymère statistique du propylène (copolymère (B)) qui contient de 3 à 15 % en poids d'unités dérivées du 1-butène et de 1 à 8 % en poids d'unités dérivées de l'éthylène, la composition des deux copolymères (A) et (B) étant différente.

Par souci de simplification de la description, les termes "unités dérivées du propylène", "unités dérivées du 1-butène" et "unités dérivées de l'éthylène" seront remplacés respectivement ci-après par les abréviations "C3", "C4" et "C2".

On observe généralement que des compositions (C) contenant des quantités plus élevées de copolymère (A) conduisent à du collage sur les rouleaux d'étirage des machines de fabrication des feuilles tandis que des quantités plus faibles de copolymère (A) conduisent à des compositions (C) dont la Tsc trop élevée.

Les copolymères (A) utilisables dans les compositions selon l'invention conduisent à une Tsc satisfaisante. En outre ils peuvent être obtenus dans des conditions de polymérisation techniquement et économiquement acceptables. Des compositions (C) contenant des teneurs plus élevées en C4 dans le copolymère (B) conduisent à une Tf trop basse. Des teneurs plus faibles en C4 dans ledit copolymère (B) conduisent à une Tsc trop élevée.

Des teneurs plus élevées en C2 dans le copolymère (B) conduisent à une Tf trop basse et des teneurs plus faibles en C2 dans ledit copolymère (B) conduisent à une Tsc trop élevée.

Avantageusement la teneur en copolymère (A) des compositions selon l'invention est d'au plus 77 % en poids et plus particulièrement 75 % en poids. Des compositions qui comprennent environ 70 % en poids de copolymères (A) conviennent bien.

Le copolymère (A) est le plus souvent tel que la quantité de C4 est d'au moins 13 % en poids par rapport audit copolymère (A). En outre cette quantité est de préférence d'au plus 18 % en poids.

Les copolymères (A) utilisés selon l'invention peuvent aussi contenir de manière optionnelle du C2. De préférence la quantité de C2 contenue dans les copolymères (A) est d'au moins 0,3 % en poids. On obtient de bons résultats lorsque cette quantité est d'au plus 0,9 % en poids. Cette faible teneur en C2 ne modifie pas fondamentalement le compromis Tf/Tsc recherché, tout en améliorant l'aptitude à l'impression des feuilles fabriquées à partir des compositions (C). On a remarqué de manière étonnante que lorsque le copolymère (A) contient de l'éthylène, il est préférable que la teneur en C4 de ce copolymère (A) n'excède pas 15 % en poids.

Les compositions (C) selon l'invention comprennent également de 20 à 32 % en poids d'un copolymère (B).

La quantité de copolymère (B) est de préférence d'au moins 23 % en poids et plus particulièrement d'au moins 25 % en poids. Une quantité de copolymère (B) d'environ 30 % en poids convient bien.

Le copolymère (B) contient au moins 3 % en poids de C4. Cette quantité de C4 est d'au plus 15 % en poids. Le copolymère (B) contient en outre de préférence au moins 1,5 % en poids de C2. On obtient de bons résultats lorsque la quantité de C2 est d'au plus 5 % en poids.

De préférence les compositions selon l'invention sont constituées essentiellement des copolymères (A) et (B). De préférence aussi les copolymères (A) et (B) ne contiennent que des unités monomériques dérivées du propylène, de 1-butène et/ou d'éthylène.

Des compositions (C) selon l'invention qui donnent de particulièrement bons résultats comprennent :
* de 68 à 75 % en poids d'un copolymère (A) contenant de 12 à 15 % en poids d'unités monomériques dérivées de 1-butène et de 0 à 1 % en poids d'unités monomériques dérivées d'éthylène, et
* de 32 à 25 % en poids d'un copolymère (B) contenant de 10 à 15 % en poids d'unités monomériques dérivées de 1-butène et de 2 à 5 % en poids d'unités monomériques dérivées d'éthylène.

Les compositions (C) selon l'invention présentent généralement un indice de fluidité en fondu (MFI), mesuré selon la norme ASTM D 1238 (230°C ; charge : 2,16 kg) de 1 à 15 g/10 min, de préférence de 2 à 10 g/10 min.

La Tf des compositions (C) selon l'invention, mesurée par calorimétrie différentielle à balayage selon la norme ASTM D 3418, est généralement d'au moins 105 °C et de préférence d'au moins 120 °C. La Tf de ces compositions est le plus souvent d'au plus 150 °C et plus particulièrement d'au plus 140 °C. Des compositions (C) dont la Tf est de 125 à 135 °C sont tout particulièrement préférées parce qu'elles permettent une mise en oeuvre aisée sur les machines de fabrication des films BOPP, avec absence de collage sur les rouleaux d'étirage dans le sens longitudinal.

Les compositions (C) selon l'invention présentent à la fois une Tf élevée et une Tsc basse. La Tsc des compositions (C) selon l'invention est d'au plus 120 °C et d'au moins 100 et plus particulièrement d'au moins 105 °C. La Tsc est déterminée comme suit : les faces non traitées de deux feuilles coextrudées et biorientées de 22 µm d'épaisseur sont mises entre les mâchoires d'une soudeuse TOYO SEIKI à une mâchoire chauffée. Une pression de 3 bars est appliquée pendant une seconde. Après refroidissement, un test de traction à 100 mm/min est effectué. La Tsc est la température, exprimée en °C, à laquelle la soudure présente une résistance de 100 g/cm. Les feuilles coextrudées biorientées sont constituées d'une couche centrale d'homopolymère du propylène (MFI : 2,8 g/10 min) de 20 µm d'épaisseur et de deux couches externes de la composition (C) selon l'invention de 1 µm d'épaisseur. Pour fabriquer ces feuilles, on pratique un étirage dans le sens longitudinal de 5 fois et un étirage dans le sens transversal de 9 fois.

Selon la présente invention la fraction soluble, appelée ci-après plus simplement FSH, est mesurée comme indiqué dans les "Food Drug Cosmetic Law Reports " du 18 avril 1994; instruction 57,038.2; paragraphe 177.1520 et est exprimée en pourcentage en poids de fractions solubles dans le n-hexane à 50 °C par rapport à l'ensemble de la composition. La FSH de la composition (C) est de préférence inférieure ou égale à 20 %. La FSH des compositions (C) est le plus souvent supérieure ou égale à 1 % en poids et inférieure ou égale à 15 %. Le plus souvent la FSH est supérieure ou égale à 2. Dans le cas où les feuilles multicouches thermoscellables doivent servir à l'emballage de denrées alimentaires, il est tout particulièrement préféré que la FSH soit inférieure ou égale à 5,5 %. Les compositions (C), donnant de particulièrement bons résultats, décrites ci-avant présentent en outre avantageusement à la fois une température de fusion telle que 125 °C ≤ Tf ≤ 135 °C, une fraction soluble d'au plus 5,5 % et une température de scellage telle que 110 °C ≤ Tsc ≤ 120 °C.

Les compositions (C) selon l'invention présentent, outre les avantages décrits ci-avant, la propriété de donner lieu à des scellages ou soudures dont la résistance à chaud, appelée communément "hot tack", est particulièrement élevée.

L'invention concerne aussi un procédé pour la fabrication des compositions (C). Selon une première variante, les compositions selon l'invention peuvent être obtenues en préparant séparément le copolymère (A) et le copolymère (B) et en procédant au mélange de ces copolymères selon toute technique connue à cet effet.

La préparation des copolymères (A) et (B) peut se faire de manière connue par copolymérisation du propylène avec le 1-butène et/ou avec l'éthylène. Le principe de ces copolymérisations est connu de l'homme du métier.

De préférence les copolymères (A) et (B) sont obtenus par polymérisation en phase gazeuse. Un tel procédé est préféré parce qu'il permet de manière aisée l'incorporation de grandes quantités de 1-butène et/ou d'éthylène. On peut procéder à ces copolymérisations en continu ou en discontinu ou par une combinaison des deux méthodes. Le mélange des copolymères (A) et (B) peut être effectué par exemple par mélange en fondu dans un mélangeur interne ou externe. De préférence, on effectue ce mélange dans un mélangeur du type extrudeuse.

Selon une variante particulièrement avantageuse, on prépare les compositions selon la présente invention par copolymérisations successives, un des copolymères étant préparé au cours d'une première étape et l'autre copolymère étant préparé, en présence du premier, au cours d'une étape de polymérisation ultérieure. Chacune de ces étapes peut être effectuée dans le même milieu de polymérisation ou dans des milieux de polymérisation différents. De préférence, on procède d'abord à la préparation du copolymère (A) et ensuite à la préparation du copolymère (B) en présence du copolymère (A) issu de la première étape. Un mode particulièrement préféré de préparation de la composition (C) consiste à synthétiser successivement le copolymère (A) puis le copolymère (B) en présence du copolymère (A) par polymérisation en phase gazeuse, dans des réacteurs successifs interconnectés fonctionnant en lit agité ou de préférence en lit fluidisé.

Les copolymères (A) et (B) peuvent être obtenus au moyen de n'importe quel système catalytique Ziegler - Natta connu suffisamment actif et productif, permettant de polymériser du propylène sous forme suffisamment stéréospécifique, et pouvant incorporer dans le polymère les quantités requises de 1-butène et/ou d'éthylène.

Les systèmes catalytiques préférés pour préparer les compositions selon l'invention comprennent :
- un solide catalytique comprenant à titre de composants essentiels du magnésium, du titane et du chlore,
- un composé organoaluminique, de préférence un trialkylaluminium, tout particulièrement le triéthylaluminium,
- un composé électrodonneur (électrodonneur externe) choisi parmi les esters d'acides carboxyliques aromatiques et les alkoxysilanes de formule R¹ₙSi(OR²)₄₋ₙ dans laquelle R¹ représente un groupe hydrocarboné contenant de 1 à 12 atomes de carbone, R² représente un groupement hydrocarboné contenant de 1 à 8 atomes de carbone et n est 1, 2, ou 3.

Les esters d'acides carboxyliques aromatiques utilisés de préférence à titre d'électrodonneur externe sont les benzoates d'alkyle et d'alkoxyalkyle, tout particulièrement le p-éthoxyéthylbenzoate. Des alkoxysilanes préférés à titre d'électrodonneur externe sont les alkylalkoxy et cycloalkylalkoxysilanes, tout particulièrement le diisobutyldiméthoxysilane, le n-propyltriméthoxysilane, le dicyclopentyldiméthoxysilane et le cyclohexylméthyldiméthoxysilane.

Les solides catalytiques utilisables selon l'invention sont bien connus de l'homme du métier. Ils contiennent le plus souvent un composé électrodonneur (électrodonneur interne) choisi parmi les mono- et diesters d'acides carboxyliques aromatiques, de préférence parmi les phtalates de dialkyle, tout particulièrement le diisobutylphtalate. Les solides catalytiques utilisables selon la présente invention peuvent également contenir des quantités plus ou moins importantes de polymères préformés. La prépolymérisation du solide catalytique peut par exemple être effectuée lors de la synthèse dudit solide ou lors d'une étape de polymérisation précédant directement la fabrication des compositions selon la présente invention. Des solides catalytiques convenant bien pour la fabrication des compositions (C) selon l'invention sont les solides catalytiques commercialisés sous la dénomination SHAC par la société SHELL et sous la dénomination THC par la société TOHO TITANIUM.

Les divers constituants du système catalytique sont généralement mis en oeuvre de manière que le rapport atomique entre l'aluminium du composé organoaluminique et le titane du solide catalytique soit de 3 à 300, de préférence de 10 à 250 et tout particulièrement de 15 à 70. En outre le rapport molaire entre l'aluminium du composé organoaluminique et le composé électrodonneur est généralement de 0,5 à 60, de préférence de 1 à 50, tout particulièrement de 2 à 30.

Les autres conditions générales de polymérisation sont bien connues de l'homme du métier. La température est généralement de 20 à 150 °C, de préférence de 40 à 95 °C, tout particulièrement de 50 à 75 °C. La polymérisation est généralement effectuée à une pression supérieure à la pression atmosphérique, de préférence de 10 à 50.10⁵ Pa.

La masse moléculaire moyenne des copolymères formés peut être réglée par l'addition d'un ou plusieurs agents de réglage connus de la masse moléculaire comme l'hydrogène, le diéthylzinc, les alcools, les éthers et les halogénures d'alkyle. L'hydrogène est le plus couramment utilisé.

Les quantités requises de monomères et d'agent de réglage de la masse moléculaire peuvent être introduits de manière continue ou discontinue dans le milieu de polymérisation.

La composition (C) peut éventuellement être soumise à un ou plusieurs traitements connus avec de l'eau, un alcool et/ou un diluant hydrocarboné pour l'élimination des résidus catalytiques et/ou des fractions de bas poids moléculaire.

Les compositions (C) selon la présente invention peuvent contenir des additifs connus pour en améliorer les propriétés. Ces additifs sont par exemple des stabilisants, des agents de neutralisation, des lubrifiants, des agents favorisant le glissement, des agents antistatiques. Le MFI des compositions (C) peut également, si nécessaire, être ajusté par mélange de préférence à l'état fondu, avec un peroxyde.

Comme mentionné plus haut, les compositions (C) selon l'invention peuvent être utilisées pour la fabrication de feuilles thermoscellables et plus particulièrement pour la fabrication de feuilles multicouches dont elles constituent la ou les couches de scellage.

Les feuilles multicouches contiennent généralement une couche de base qui peut être constituée de n'importe quel matériau polymérique, en général d'un polymère cristallin d'α-oléfine. De préférence, la feuille de base est constituée substantiellement d'un polymère cristallin du propylène. Il présente le plus souvent une viscosité intrinsèque [η], mesurée dans la décaline à 135 °C, de 1,5 à 4 dl/g. Son isotacticité est de préférence telle que sa fraction insoluble dans l'heptane bouillant est supérieure à 85 % en poids et plus particulièrement supérieure à 95 % en poids. Ce polymère cristallin du propylène peut aussi être un copolymère de propylène, d'éthylène et/ou de 1-butène, contenant en général moins de 8 % en poids de ces comonomères, de préférence moins de 5 % en poids.

Les feuilles multicouches selon l'invention peuvent être obtenues :
- en faisant adhérer entre elles, par pressage entre des rouleaux chauffés, une feuille de base préalablement façonnée et une ou plusieurs feuilles préalablement façonnées à partir de la composition (C);
- en revêtant une feuille de base au moyen d'une solution ou d'une dispersion de la composition (C) dans un solvant organique pour laminer la composition (C) sur la feuille de base;
- en extrudant une couche de la composition (C) en fondu pour la laminer sur la feuille de base;
- en extrudant séparément la composition (C) et la feuille de base et en joignant les extrudats fondus via une filière commune.

Les compositions (C) selon l'invention conviennent particulièrement bien pour l'obtention de feuilles multicouches selon la dernière méthode.

L'épaisseur des feuilles multicouches selon l'invention est généralement de 5 à 300 µm, de préférence de 10 à 170 µm. L'épaisseur de la (des) couche(s) de scellage à base de la composition (C) est généralement de 0,1 à 50 µm, de préférence de 0,5 à 30 µm. L'épaisseur de la feuille de base est généralement de 5 à 200 µm, de préférence de 10 à 70 µm.

Les feuilles multicouches selon l'invention peuvent être utilisées sans être étirées. De préférence elles sont étirées monoaxialement et plus particulièrement biaxialement, en vue de leur orientation, après revêtement de la feuille de base par la ou les couches de composition (C). Cet étirage peut être effectué selon l'une des méthodes connues ci après :
- on étire biaxialement la feuille multicouche obtenue par coextrusion, au travers d'une filière commune, de la composition (C) et de la feuille de base;
- on extrude une couche de la composition (C) sur une feuille de base préformée et on étire biaxialement la feuille multicouche ainsi obtenue;
- on étire préalablement monoaxialement à chaud une feuille de base dans le sens longitudinal (sens "machine" (MD)) au moyen d'une série de rouleaux incluant un rouleau métallique, on extrude une couche de la composition (C) sur cette feuille ainsi monoaxialement étirée et on étire la feuille multicouche ainsi obtenue dans le sens transversal (TD).

On observe de manière étonnante que les compositions (C) selon l'invention ne conduisent pas à des problèmes de collage sur les rouleaux lorsqu'on met en oeuvre les deux premières méthodes d'étirage.

Les feuilles multicouches ainsi obtenues sont particulièrement appropriées à toutes les applications d'emballage.

Les exemples suivants servent à illustrer l'invention.
Dans ces exemples, les MFI, Tf, Tsc et FSH sont mesurés comme décrit plus haut. La teneur en C4 des copolymères (A) et (B) est déterminée par spectrométrie IR à transformée de FOURIER en utilisant la bande d'absorption à 767 cm⁻¹ sur un film pressé de 200 µm et est exprimée en % en poids. La teneur en C2 est déterminée par la même méthode à partir des bandes d'absorption à 733 cm⁻¹ et à 720 cm⁻¹ et est exprimée en % en poids. La teneur en C3 est déterminée par bilan massique et exprimée également en % en poids.

### Exemple 1

On prépare comme suit une composition (C) comprenant (pourcentages en poids) :
75 % d'un copolymère (A) et 25 % d'un copolymère (B). Le copolymère (A) contient 86,5 % de C3 et 13,5 % de C4 et le copolymère (B) contient 84,3 % de C3, 11 % de C4 et 4,7 % de C2.

Les teneurs totales respectives en C4 et C2 de la composition (C) sont 13 et 1,3 %.

On effectue la préparation successive de chacun des copolymères (A) et (B) dans deux réacteurs à lits fluidisés, équipés chacun d'une grille de distribution des gaz, connectés en série et fonctionnant en continu. On fait circuler à travers ces réacteurs, via un compresseur, en concentration stationnaire stable, une navette gazeuse contenant l'azote, du propylène, du 1-butène, de l'hydrogène (et de l'éthylène dans le second réacteur).

Les rapports molaires (mole/mole) des constituants de la navette gazeuse dans le premier réacteur sont :
- hydrogène/propylène : 0,011;
- 1-butène/propylène : 0,19.

Les rapports molaires (mole/mole) des constituants de la navette gazeuse dans le second réacteur sont :
- hydrogène/propylène : 0,028;
- éthylène/propylène : 0,029;
- 1-butène/propylène : 0,17.

La pression totale dans le premier réacteur est réglée à 36 bar et dans le second à 22 bar. La température est réglée à 65 °C dans les deux réacteurs. La navette gazeuse traverse le lit fluide du premier réacteur à une vitesse de 0,31 m/s et le lit fluide du second réacteur à une vitesse de 0,48 m/s. Les particules sortant du premier réacteur sont introduites dans le second après dégazage sous atmosphère d'azote dans un sas et repressurisation.

Le système catalytique, introduit dans le premier réacteur, contient:
- un solide catalytique contenant du magnésium, du titane, du chlore et un électrodonneur, commercialisé par SHELL sous la dénomination SHAC 201,
- du triéthylaluminium (TEAL), et
- du n-propyltriméthoxysilane.

Le rapport atomique entre l'aluminium du TEAL et le titane du solide catalytique est 70; le rapport atomique entre l'aluminium du TEAL et le silicium du silane est 5.

Le temps de séjour moyen des particules de copolymère dans chaque réacteur est d'environ 1,8 heure.

La composition (C) obtenue présente les caractéristiques suivantes :
MFI (g/10 min) : 4,9;
Tf (°C) : 130
Tsc (°C) : 117
FSH (% poids) : 4,5

### Exemple 2R

Cet exemple est donné à titre de comparaison.

On prépare, dans le premier des réacteurs mentionnés à l'exemple 1 et selon les conditions générales mentionnées à cet exemple, une composition ne comprenant qu'un seul copolymère contenant (% en poids):
91 % de C3;
7 % de C4;
2 % de C2.

Cette composition présente les caractéristiques suivantes :
MFI (g/10min) : 5
Tf (°C) : 125,5
Tsc (°C) : 121

Cette composition conduit à des problèmes de collage sur les rouleaux des machines utilisées pour sa mise en oeuvre.

### Exemple 3R

Cet exemple est donné à titre de comparaison.

On prépare, dans le premier des réacteurs mentionnés à l'exemple 1 et selon les conditions générales mentionnées à cet exemple, une composition ne comprenant qu'un seul copolymère contenant (% en poids):
81,4 % de C3;
18 % de C4;
0,6 % de C2.

Cette composition présente les caractéristiques suivantes.
MFI (g/10 min) : 5
Tf (°C) : 115
Tsc (°C) : 103

Cette composition conduit à des problèmes de collage lors de sa mise en oeuvre comme couche de scellage pour la fabrication de feuilles multicouches thermoscellables.

### Exemples 4 à 6 (selon l'invention) et 7 (de référence)

Les compositions (C) de ces exemples sont décrites dans le Tableau 1 ci-après. Ces compositions sont préparées dans les conditions générales mentionnées à l'exemple 1 en ajustant les quantités de monomères et d'hydrogène mises en oeuvre.

**Tableau I**

| Exemples | 4 | 5 | 6 | 7* |
|---|---|---|---|---|
| Copolymère (A) | | | | |
| % en poids | 70 | 70 | 73 | 71 |
| C2 % en poids | 0,6 | 0 | 0,7 | 0 |
| C4 % en poids | 17,5 | 13,8 | 17 | 12,5 |

| Copolymères (B) | | | | |
|---|---|---|---|---|
| % en poids | 30 | 30 | 27 | 29 |
| C2 % en poids | 2,6 | 4 | 2 | 7,5 |
| C4 % en poids | 7 | 12 | 4 | 0 |
| MFI | 3 | 2,9 | 2,9 | 3,9 |
| Tf (°C) | 118,2 | 130,4 | 119 | 134 |
| Tsc (°C) | 104 | 116 | 109 | 125 |
| FSH (% poids) | 20 | 4,5 | 6,3 | 2,2 |

| | | | | |
|---|---|---|---|---|
| * Exemple de référence | | | | |

## Revendications

1. Compositions à base de polymères du propylène (compositions (C)) comprenant :
- de 68 à 80 % en poids d'un copolymère statistique du propylène (copolymère (A)) qui contient de 12 à 20 % en poids d'unités dérivées du 1-butène et de 0 à 2 % en poids d'unités dérivées de l'éthylène, et
- de 32 à 20 % en poids d'un copolymère statistique du propylène (copolymère (B)) qui contient de 3 à 15 % en poids d'unités dérivées du 1-butène et de 1 à 8 % en poids d'unités dérivées de l'éthylène, la composition des deux copolymères (A) et (B) étant différente,
ladite composition présentant une température de scellage (Tsc) telle que 100 °C ≤ Tsc ≤ 120 °C.

2. Compositions selon la revendication 1, comprenant :
- de 68 à 75 % en poids d'un copolymère (A) contenant de 12 à 15 % en poids d'unités monomériques dérivées de 1-butène et de 0 à 1 % en poids d'unités monomériques dérivées d'éthylène, et
- de 32 à 25 % en poids d'un copolymère (B) contenant de 10 à 15 % en poids d'unités monomériques dérivées de 1-butène et de 2 à 5 % en poids d'unités monomériques dérivées d'éthylène.

3. Compositions selon l'une quelconque des revendications 1 et 2, présentant un indice de fluidité en fondu (MFI), mesuré selon la norme ASTM D 1238 (230 °C; charge : 2,16 kg) de 2 à 10 g/10 min.

4. Compositions selon l'une quelconque des revendications 1 à 3, présentant une fraction soluble (FSH) inférieure ou égale à 5,5 % en poids

5. Compositions selon la revendication 2, présentant une température de fusion (Tf) telle que 125 °C ≤ Tf ≤ 135 °C; une fraction soluble (FSH) d'au plus 5,5 % et une température de scellage (Tsc) telle que 110 C ≤ Tsc ≤ 120°C.

6. Procédé pour la fabrication des compositions selon l'une quelconque des revendications 1 à 5, par mélange en fondu des copolymères (A) et (B) dans un mélangeur interne ou externe.

7. Procédé pour la fabrication des compositions selon l'une quelconque des revendications 1 à 5, par de copolymérisations successives, le copolymère (A) étant synthétisé au cours de la première étape et le copolymère (B) étant synthétisé au cours de la deuxième étape en présence du copolymère (A).

8. Procédé selon la revendication 7, caractérisé en ce que les deux étapes de copolymérisation successives sont effectuées en phase gazeuse.

9. Procédé selon l'une quelconque des revendications 7 et 8, caractérisé en ce que les deux étapes de copolymérisation successives sont effectuées en présence d'un système catalytique comprenant :
- un solide catalytique comprenant à titre de composants essentiels du magnésium, du titane et du chlore,
- un composé organoaluminique,
- un composé électrodonneur choisi parmi les esters d'acides carboxyliques aromatiques et les alkoxysilanes de formule
R¹ ₙ Si(OR²)₄₋ₙ
dans laquelle R¹ représente un groupe hydrocarboné contenant de 1 à 12 atomes de carbone, R² représente un groupement hydrocarboné contenant de 1 à 8 atomes de carbone et n est 1, 2 ou 3.

10. Feuilles multicouches thermoscellables caractérisées en ce que leur couche de scellage est substantiellement constituée d'une composition (C) selon l'une quelconque des revendications 1 à 5.

11. Feuilles multicouches thermoscellables selon la revendication 10 caractérisées en ce que la feuille de base est constituée substantiellement d'un polymère cristallin du propylène.

12. Feuilles multicouches thermoscellables selon l'une quelconque des revendications 10 et 11, caractérisées en ce qu'elles sont orientées par étirage.

13. Matériau d'emballage à base de feuilles selon l'une quelconque des revendications 10 à 12.

## Patentansprüche

1. Zusammensetzungen auf der Basis von Propylenpolymeren (Zusammensetzungen (C)), die umfassen:
- 68 bis 80 Gew.-% eines statistischen Propylencopolymers (Copolymer (A)), das 12 bis 20 Gew.-% von 1-Buten abgeleitete Einheiten und 0 bis 2 Gew.-% von Ethylen abgeleitete Einheiten enthält, und
- 32 bis 20 Gew.-% eines statistischen Propylencopolymers (Copolymer (B)), das 3 bis 15 Gew.-% von 1-Buten abgeleitete Einheiten und 1 bis 8 Gew.-% von Ethylen abgeleitete Einheiten enthält, wobei die Zusammensetzung der beiden Copolymere (A) und (B) unterschiedlich ist,
wobei besagte Zusammensetzung eine derartige Siegeltemperatur (Tsc) aufweist, daß 100°C ≤ Tsc ≤ 120°C.

2. Zusammensetzungen gemäß Anspruch 1, die umfassen:
- 68 bis 75 Gew.-% eines Copolymers (A), das 12 bis 15 Gew.-% von 1-Buten abgeleitete Monomereinheiten und 0 bis 1 Gew.-% von Ethylen abgeleitete Monomereinheiten enthält, und
- 32 bis 25 Gew.-% eines Copolymers (B), das 10 bis 15 Gew.-% von 1-Buten abgeleitete Monomereinheiten und 2 bis 5 Gew.-% von Ethylen abgeleitete Monomereinheiten enthält.

3. Zusammensetzungen gemäß einem der Ansprüche 1 und 2, die eine Fließzahl in der Schmelze (MFI), gemessen gemäß der Norm ASTM D 1238 (230 °C; Last: 2,16 kg), von 2 bis 10 g/10 min aufweisen.

4. Zusammensetzungen gemäß einem der Ansprüche 1 bis 3, die einen löslichen Anteil (FSH) kleiner oder gleich 5,5 Gew.-% aufweisen.

5. Zusammensetzungen gemäß Anspruch 2, die eine derartige Schmelztemperatur (Tf), daß 125 °C ≤ Tf ≤ 135 °C; einen löslichen Anteil (FSH) von höchstens 5,5 % und eine derartige Siegeltemperatur (Tsc), daß 110 °C ≤ Tsc ≤ 120 °C, aufweisen.

6. Verfahren zur Herstellung der Zusammensetzungen gemäß einem der Ansprüche 1 bis 5 durch Mischen in der Schmelze der Copolymere (A) und (B) in einem internen oder externen Mischer.

7. Verfahren zur Herstellung der Zusammensetzungen gemäß einem der Ansprüche 1 bis 5 durch aufeinanderfolgende Copolymerisationen, wobei das Copolymer (A) im Verlauf des ersten Schritts synthetisiert wird und das Copolymer (B) im Verlauf des zweiten Schritts in Gegenwart des Copolymers (A) synthetisiert wird.

8. Verfahren gemäß Anspruch 7, dadurch gekennzeichnet, daß die beiden aufeinanderfolgenden Copolymerisationsschritte in der Gasphase ausgeführt werden.

9. Verfahren gemäß einem der Ansprüche 7 und 8, dadurch gekennzeichnet, daß die beiden aufeinanderfolgenden Copolymerisationsschritte in Gegenwart eines katalytischen Systems ausgeführt werden, das umfasst:
- einen katalytischen Feststoff, der als wesentliche Bestandteile Magnesium, Titan und Chlor umfasst,
- eine aluminiumorganische Verbindung,
- eine Elektronendonorverbindung, die ausgewählt ist unter den Estem aromatischer Carbonsäuren und den Alkoxysilanen der Formel
R¹ ₙ Si (OR²)₄₋ₙ
in der R¹ eine Kohlenwasserstoffgruppe mit 1 bis 12 Kohlenstoffatomen darstellt, R² eine Kohlenwasserstoffgruppierung mit 1 bis 8 Kohlenstoffatomen darstellt und n gleich 1, 2 oder 3 ist.

10. Heißsiegelbare Mehrschichtfolien, dadurch gekennzeichnet, daß ihre Siegelschicht im wesentlichen aus einer Zusammensetzung (C) gemäß einem der Ansprüche 1 bis 5 besteht.

11. Heißsiegelbare Mehrschichtfolien gemäß Anspruch 10, dadurch gekennzeichnet, daß die Basisfolie im wesentlichen aus einem kristallinen Propylenpolymer besteht.

12. Heißsiegelbare Mehrschichtfolien gemäß einem der Ansprüche 10 und 11, dadurch gekennzeichnet, daß sie durch Recken orientiert sind.

13. Verpackungsmaterial auf der Basis von Folien gemäß einem der Ansprüche 10 bis 12.

## Claims

1. Compositions based on propylene polymers (compositions (C)) comprising :
* from 68 to 80% by weight of a statistical propylene copolymer (copolymer (A)) which contains from 12 to 20% by weight of units derived from 1-butene and from 0 to 2% by weight of units derived from ethylene, and
* from 32 to 20% by weight of a statistical propylene copolymer (copolymer (B)) which contains from 3 to 15% by weight of units derived from 1-butene and from 1 to 8% by weight of units derived from ethylene, the composition of the two copolymers (A) and (B) being different, said compositions having a sealing temperature (ST) such that 100°C ≤ ST ≤ 120°C.

2. Compositions according to Claim 1, comprising :
* from 68 to 75% by weight of a copolymer (A) containing from 12 to 15% by weight of monomer units derived from 1-butene and from 0 to 1% by weight of monomer units derived from ethylene, and
* from 32 to 25% by weight of a copolymer (B) containing from 10 to 15% by weight of monomer units derived from 1-butene and from 2 to 5% by weight of monomer units derived from ethylene.

3. Composition according to either of Claims 1 and 2, exhibiting a melt flow index (MFI), measured according to ASTM Standard D 1238 (230°C; load: 2.16 kg), of 2 to 10 g/10 min.

4. Compositions according to any one of Claims 1 to 3, exhibiting a soluble fraction (HSF) of less than or equal to 5.5% by weight.

5. Composition according to Claim 2, exhibiting a melting temperature (MT) such that 125°C ≤ MT ≤ 135°C, a soluble fraction (HSF) of at most 5.5% and a sealing temperature (ST) such that 110°C ≤ ST ≤ 120°C.

6. Process for the manufacture of the compositions according to any one of Claims 1 to 5, by melt mixing the copolymers (A) and (B) in an internal or external mixer.

7. Process for the manufacture of the compositions according to any one of Claims 1 to 5, by successive copolymerizations, the copolymer (A) being synthesized during the first stage and the copolymer (B) being synthesized during the second stage in the presence of the copolymer (A).

8. Process according to Claim 7, characterized in that the two successive copolymerization stages are carried out in the gas phase.

9. Process according to either of Claims 7 and 8, characterized in that the two successive copolymerization stages are carried out in the presence of a catalytic system comprising :
- a catalytic solid comprising magnesium, titanium and chlorine as essential components,
- an organoaluminium compound,
- an electron-donating compound chosen from aromatic carboxylic acid esters and alkoxysilanes of formula R¹ₙSi(OR²)₄₋ₙ in which R¹ represents a hydrocarbon group containing from 1 to 12 carbon atoms, R² represents a hydrocarbon group containing from 1 to 8 carbon atoms and n is 1, 2 or 3.

10. Multilayer heat-sealable sheets, characterized in that their sealing layer is substantially composed of a composition (C) according to any one of Claims 1 to 5.

11. Multilayer heat-sealable sheets according to Claim 10, characterized in that the base sheet is composed substantially of a crystalline propylene polymer.

12. Multilayer heat-sealable sheets according to either of Claims 10 and 11, characterized in that they are oriented by drawing.

13. Packaging material based on sheets according to any one of Claims 10 to 12.
